# EUROPÄISCHE PATENTSCHRIFT

(11) **EP 2 913 863 B1**
(45) Veröffentlichungstag und Bekanntmachung des Hinweises auf die Patenterteilung: **20.03.2019**
(21) Anmeldenummer: 14003895.1
(22) Anmeldetag: 19.11.2014
(51) Int. Cl.: H01M 2/10, H01M 10/42, B60L 11/18

(54) **Elektrische Energiespeichervorrichtung für Kraftfahrzeuge**
Electric energy storage device for motor vehicles
Unité de stockage d'énergie électrique pour véhicules automobiles

(30) Priorität: 26.02.2014 DE 102014002819
(43) Veröffentlichungstag der Anmeldung: 02.09.2015
(73) Patentinhaber: MAN Truck & Bus AG, 80995 München (DE)
(72) Erfinder: John, Dennis, 80992 München (DE); Kratzer, Sebastian, 85757 Karlsfeld (DE); Hessel, Marcel, 80469 München (DE); Pfau, Stefan, 82377 Penzberg (DE)
(74) Vertreter: v. Bezold & Partner Patentanwälte - PartG mbB

(56) Entgegenhaltungen:
- DE-A1-102011 101 352
- US-A1- 2008 062 622
- US-A1- 2012 212 882

## Beschreibung

Die Erfindung betrifft eine elektrische Energiespeichervorrichtung, insbesondere für Hybrid-, Plug-In-Hybrid-, Brennstoffzellen und Elektrofahrzeuge.

Hybrid-, Plug-In-Hybrid-, Brennstoffzellen und Elektrofahrzeuge verfügen über einen Traktionsenergiespeicher. Der Traktionsenergiespeicher dient zur Bereitstellung von Rekuperations- und Antriebsenergie. Traktionsenergiespeicher können auf Basis von Akkumulatoren, z. B. Li-Ionen-Batterien, oder sogenannten Superkondensatoren (Ultracap-Speichern) gebildet sein. Ein Traktionsenergiespeicher kann auch eine Kombination derartiger Speichertypen enthalten (sogenannter hybrider Energiespeicher). Typischerweise sind derartige Traktionsenergiespeicher modular aufgebaut, wobei einzelne Energiespeicherzellen zu sogenannten Speicherpacks zusammengefasst werden.

Aus der Praxis ist es ferner bekannt, eine Batterie-Schützbox für Traktionsenergiespeicher (englisch "battery junction box") vorzusehen. Die Schützbox für Hochvolt(HV)-Traktionsenergiespeicher besteht aus Trennelementen und Absicherungen, um den spannungsführenden Teil des Traktionsenergiespeichers vom Hochvolt(HV)-Bordnetz zu trennen. Derartige als Schützbox bezeichnete Vorrichtungen stellen sicher, dass keine gefährliche Spannung an den berührungsgefährdeten Teilen, wie etwa von außen zugänglichen Kontakten etc., anliegt.

Aus der Offenlegungsschrift DE 10 2011 101 352 A1 ist eine HV-Batterie, insbesondere Traktionsbatterie für ein Fahrzeug, bekannt, die mehrere Zellenmodule aufweist, die jeweils mehrere Zellen umfassen, wobei in jedem Zellenmodul eine Steuerung zur Zellenüberwachung und/oder zum Zellenbalancing zugeordnet ist. Die Steuerung ist hierbei an ein Batteriemanagement-Steuergerät für Kommunikations- oder Steuerungs- und/oder Regelzwecke angeschlossen. Die HV-Batterie ist modular ausgebildet, indem die Zellenmodule als auf einer Platine lösbar befestigbare oder befestigte Steckmodule ausgebildet sind. Aus der Offenlegungsschrift US 2008/0062622 A1 ist eine Energieversorgungseinheit vorgesehen, die am Boden hinter einem Sitz angeordnet ist und Batteriemodule sowie einen DC/DC-Wandler umfasst. Ferner ist eine Hochspannungsverteilungseinrichtung in der Energieversorgungseinheit vorgesehen.

Nachteilig an den aus dem Stand der Technik bekannten Traktionsenergiespeichern, insbesondere den Traktionsenergiespeichern für Nutzfahrzeuge, ist der hohe Integrations- und Montageaufwand. So ist es bei den aus dem Stand der Technik bekannten Traktionsenergiespeichern beispielsweise notwendig, den Traktionsenergiespeicher bzw. die Schützbox nach der Befestigung am Fahrzeug mit einer Hochvoltverteilungsvorrichtung oder einer Ladeschnittstelle zu verkabeln.

Es ist somit eine Aufgabe der Erfindung, eine verbesserte elektrische Energiespeichervorrichtung bereitzustellen, mit der Nachteile herkömmlicher Traktionsenergiespeicher vermieden werden können. Die Aufgabe der Erfindung ist es insbesondere, eine schnellere Montage des Traktionsenergiespeichers im Fahrzeug zu ermöglichen.

Diese Aufgaben werden durch eine elektrische Energiespeichervorrichtung, insbesondere für Hybrid-, Plug-In-Hybrid-, Brennstoffzellen- und Elektrofahrzeuge, gemäß den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird eine elektrische Energiespeichervorrichtung für Kraftfahrzeuge vorgeschlagen, mit einem Gehäuse, das einen Speicher für elektrische Energie und eine Batterie-Schützbox umfasst. Die elektrische Energiespeichervorrichtung ist vorzugsweise ein Traktionsenergiespeicher für Hybrid-, Plug-In-Hybrid-, Brennstoffzellen- und Elektrofahrzeuge.

Der Speicher für elektrische Energie kann als Akkumulatorspeicher, z. B. als Li-Ionen-Batterie, als Superkondensatorspeicher oder als hybrider Energiespeicher mit Akkumulatorelementen und Superkondensatorelementen ausgeführt sein. Der Speicher ist vorzugsweise modular aufgebaut, wobei einzelne Energiespeicherzellen zu sogenannten Speicherpacks zusammengefasst werden.

Die Batterie-Schützbox bezeichnet eine Vorrichtung, die Trennelemente und Absicherungen enthält, um den spannungsführenden Teil des Traktionsenergiespeichers vom Hochspannungs(HV)-Bordnetz zu trennen. Für das Zuschalten des Traktionsenergiespeichers zu einem spannungsführenden HV-Bordnetz kann auch eine Vorladevorrichtung in der Schützbox vorgesehen sein. Es wurde bereits vorstehend erwähnt, dass eine derartige Batterie-Schützbox sicherstellt, dass keine gefährliche Spannung an berührungsgefährdeten Teilen der elektrischen Energiespeichervorrichtung anliegt.

Derartige Speicher für elektrische Energie und Batterie-Schützboxen sind an sich aus dem Stand der Technik bekannt und müssen deshalb nicht weiter beschrieben werden.

Gemäß der vorliegenden Erfindung ist in dem Gehäuse der elektrischen Energiespeichervorrichtung ferner eine Hochspannungsverteilungseinrichtung vorgesehen, die zur Strom- und Spannungsverteilung ausgebildet ist. Eine derartige Hochspannungsverteilungseinrichtung (englisch "High Voltage Distribution" (HVD)), nachfolgend auch als Hochvoltverteiler bezeichnet, dient zur Strom- und Spannungsverteilung für weitere im Fahrzeugsystem angeschlossene Komponenten. Dies können weitere Hochvoltkomponenten verschiedener Leistungsklassen sein, zum Beispiel Nebenaggregate. Die Hochspannungsverteilungseinrichtung ist somit eingerichtet, Energie aus dem Antriebsstrang aufzunehmen und an den / die Speicher für elektrische Energie weiterzuleiten, Energie aus dem Speicher zum Antrieb des Fahrzeugs oder zur Versorgung von Nebenaggregate zu liefern oder an weitere im System angeschlossene Traktionsenergiespeicher zu verteilen.

Der Hochvoltverteiler umfasst eine Mehrzahl von Leistungs- und Nebenaggregatsschnittstellen in Form entsprechender Hochspannungsleitungen und die jeweiligen Absicherungen. Ferner sind am Gehäuse der elektrischen Energiespeichervorrichtung entsprechende HV-Schnittstellen für die zugehörigen Ein- bzw. Ausgänge der Hochspannungsleitungen vorgesehen.

Gemäß der vorliegenden Erfindung ist die Hochvoltverteilungseinrichtung somit direkt in das Gehäuse der elektrischen Energiespeichervorrichtung integriert und über die Schützbox mit dem Speicher für elektrische Energie verschaltet, so dass in einer baulichen Einheit sowohl der Speicher für die elektrische Energie und die Batterie-Schützbox als auch die Hochspannungsverteilungseinrichtung bereitgestellt werden.

Die Integration des Hochvoltverteilers in das Systemgehäuse der elektrischen Energiespeichervorrichtung führt zu einer Reduktion des Verkabelungsaufwandes beim Anschluss der Energiespeichervorrichtung und zu dem Entfall von Steckern. Ferner kann der Hochvoltverteiler bereits separat vormontiert und mit der Schützbox verschaltet werden, so dass eine schnellere Endmontage des Energiespeichers, zum Beispiel an einem LKW oder einem Bus, ermöglicht wird.

Gemäß der vorliegenden Erfindung umfasst die elektrische Energiespeichervorrichtung ferner eine Gleichstrom-Ladeschnittstelle, nachfolgend auch als DC-Ladeschütze bezeichnet, um den Speicher für elektrische Energie mit Gleichstrom zu laden. Über die Gleichstromschnellladeschnittstelle kann der Speicher für elektrische Energie über eine externe Gleichstrom-Ladestation geladen werden. Die DC-Ladeschütze kann beispielsweise auch für eine "Vorklimatisierung" eines Busses mit Hybrid- oder Elektroantrieb genutzt werden, solange das Fahrzeug noch auf einem Betriebshof steht.

Ferner umfasst die Gleichstrom-Ladeschnittstelle eine am Gehäuse angeordnete Gleichstrom-Ladebuchse, die mit einer Absicherung und mindestens einer Trennvorrichtung, die in der Schützbox angeordnet sind, über eine Hochspannungsleitung verbunden ist. Durch die zusätzliche Integration einer Gleichstrom-Ladeschnittstelle in das Gehäuse der elektrischen Energiespeichervorrichtung kann der Verkabelungsaufwand und die benötigte Anzahl von Steckern weiter reduziert werden.

Gemäß der vorliegenden Erfindung umfasst die Energiespeichereinheit ferner eine AC/DC-Ladeeinrichtung, um eine zusätzliche Lademöglichkeit mit Wechselstrom zu ermöglichen. Dies bietet den Vorteil des kostengünstigen Betriebs von Nebenaggregaten bei LKWs mit "günstigem Baustrom", zum Beispiel unter Verwendung von Drehstrom auf einer Baustelle. Hierzu umfasst die AC/DC-Ladeeinrichtung eine am Gehäuse angeordnete Wechselstromladebuchse sowie einen im Gehäuse angeordneten AC/DC-Wandler, der eingangsseitig mit der Ladebuchse und ausgangsseitig mit der Hochspannungsverteilungseinrichtung verbunden ist.

Dies bietet wiederum den Vorteil, dass auch der AC-DC-Wandler eine Hochspannungsleitung der Hochspannungsverteilereinrichtung nutzt und dadurch eine höhere Integration der einzelnen Bauteile ermöglicht wird.

Gemäß einer vorteilhaften Variante dieser Ausführungsform kann die Hochspannungsverteilungseinrichtung eine Hochspannungsleitung umfassen, welche die Gleichstromladebuchse mit der Absicherung der Gleichstromladeschnittstelle verbindet. Dadurch kann die Hochspannungsverteilungseinrichtung auch zum externen Laden über die Gleichstromladebuchse verwendet werden, um dadurch sonst benötigte zusätzliche Kabel oder Stecker einzusparen.

Vorzugsweise ist am Gehäuse ein Ladekopf angeordnet, in dem sowohl die Gleichstromladebuchse als auch die Wechselstromladebuchse integriert sind. Unter einem derartigen Ladekopf wird eine Schnittstellenvorrichtung verstanden, über die eine externe Gleichstromquelle und eine externe Wechselstromquelle an die elektrische Energiespeichervorrichtung angeschlossen werden können, um den Energiespeicher zu laden und/oder um Nebenaggregate direkt mit Energie zu versorgen.

Gemäß einer weiteren Ausführungsvariante kann die Energiespeichervorrichtung einen Bordnetz-Ladewandler umfassen, der ausgebildet ist, die Hochvoltspannung auf eine Niedervoltspannung des Niedervolt-Bordnetzes herunterzuwandeln. Der Bordnetz-Ladewandler ist somit ein Spannungswandler und setzt beispielsweise die Hochvoltspannung auf eine 12VDC, 24VDC oder 48VDC-Niedervoltspannung herunter. Der Bordnetz-Ladewandler ist eingerichtet, die benötigte Hochvoltspannung aus dem Hochspannungsverteiler zu entnehmen. Als Ausgang des Bordnetz-Ladewandlers ist in diesem Ausführungsbeispiel am Gehäuse der elektrischen Energiespeichervorrichtung eine Niedervoltschnittstelle vorgesehen.

Der Bordnetz-Ladewandler ist somit vorzugsweise eingangsseitig mit der Hochspannungsverteilereinrichtung verbunden und ausgangsseitig mit einer Ausgangsbuchse, die am Gehäuse angeordnet ist.

Die Integration des DC/DC-Bordnetz-Ladewandlers ermöglicht die Verringerung von HV-Schnittstellen im Fahrzeug und die Nutzung der im Speichersystem vorhandenen Kühlplatten zusätzlich für den Bordnetz-Ladewandler. Somit können ein separates Gehäuse und separate Kühlplatten für den Bordnetz-Ladewandler eingespart werden.

Vorzugsweise sind ein Hochspannungseingang und eine Mehrzahl von Hochspannungsausgängen an einer Gehäusewand des Gehäuses, die benachbart zu der Hochspannungsverteilereinrichtung ist, angeordnet. Dies reduziert die erforderliche Länge der benötigten Hochspannungsleitungen.

Gemäß einem weiteren bevorzugten Ausführungsbeispiel ist eine Anordnung aus mindestens zwei Energiespeichereinrichtungen nach den vorhergenannten Aspekten vorgesehen, die parallel oder in Serie geschaltet sind. Hierbei weist nur eine der mindestens zwei Energiespeichereinrichtungen eine Gleichstrom-Ladeschnittstelle und/oder eine AC/DC-Ladeeinrichtung auf. Mit einer derartigen Anordnung kann die verfügbare Speicherkapazität modular je nach Bedarf erweitert werden, wobei die jeweils nur einmal benötigten Gleichstrom- und/oder Wechselstromlademöglichkeiten nur einmal vorgesehen sind.

Ein weiterer Aspekt der Erfindung betrifft ein Kraftfahrzeug, insbesondere ein Nutzfahrzeug, mit einer Energiespeichereinheit nach einem der vorstehend beschriebenen Aspekte beziehungsweise einer Anordnung aus mindestens zwei Energiespeichereinrichtungen, wie vorstehend beschrieben.

Weitere Einzelheiten und Vorteile der Erfindung werden im Folgenden unter Bezug auf die beigefügten Zeichnungen beschrieben. Es zeigen:
- Figur 1: ein Blockschaltbild einer elektrischen Energiespeichervorrichtung gemäß einem nicht beanspruchten Beispiel;
- Figur 2: ein Blockschaltbild einer elektrischen Energiespeichervorrichtung gemäß einem nicht beanspruchten Beispiel;
- Figur 3: ein Blockschaltbild einer elektrischen Energiespeichervorrichtung gemäß einem Ausführungsbeispiel der Erfindung; und
- Figur 4: ein Blockschaltbild einer elektrischen Energiespeichervorrichtung gemäß einem nicht beanspruchten Beispiel.

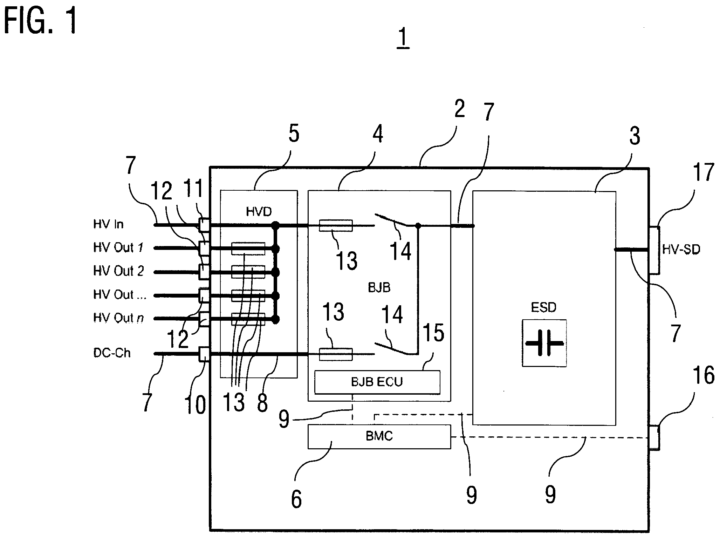

Figur 1 illustriert einen Traktionsenergiespeicher gemäß einem nicht beanspruchten Beispiel anhand eines Blockschaltbildes. Der Traktionsenergiespeicher 1 umfasst ein Systemgehäuse 2, in das die nachfolgend beschriebenen Komponenten des Traktionsenergiespeichers integriert sind. In dem Gehäuse 2 befindet sich ein Speicher für elektrische Energie 3, der wiederum selbst von einem Gehäuse umhaust ist (nicht dargestellt). Dieses Speicherelement 3 kann als Li-Ionen oder/und als Ultracap-Speicher ausgeführt sein und ist immer spannungsführend. Das Speicherelement 3 ist aus einzelnen Zellen aufgebaut, die wiederum zu einem Energiespeicherpack zusammengeschaltet sind. Ferner sind Kühlplatten zur Kühlung des Speicherelements 3 vorgesehen (nicht gezeigt).

In dem Gehäuse 2 des Traktionsenergiespeichers 1 ist ferner ein Batteriemanagementsystem 6 integriert, das über eine Signalleitung 9 die Lade- und Entladevorgänge des Energiespeichers 3 steuert.

Derartige Batteriemanagementsysteme 6 und Speicherelemente 3 sind an sich aus dem Stand der Technik bekannt und müssen hier nicht näher beschrieben werden.

Die gestrichelten Linien stellen Signalleitungen, die fett gezeichneten Linien 7 Hochspannungsleitungen dar. Das Batteriemanagementsystem 6 ist über eine Signalleitung 9 mit einer Schnittstelle 16 verbunden, über die das Batteriemanagementsystem 6 Steuersignale und Sensordaten empfangen kann. Der Speicher 3 für elektrische Energie ist über eine Hochspannungsleitung 7 mit einem Hochspannungstrennschalter 17 (englisch "high voltage service disconnect") verbunden.

Der Hochspannungstrennschalter 17 dient zu Wartungs- und Servicezwecken am elektrischen Antriebssystem und garantiert die Spannungsfreiheit am Fahrzeug, beispielsweise als Ausführung eines HV-Steckerkontaktes. Durch das Öffnen dieses Trennschalters 17 wird der HV-Pfad in den Speicherelementen 3 unterbrochen und durch Zusatzfunktionalitäten zum Beispiel die Ansteuerung der Hauptschütze 14 unterbrochen, so dass diese nicht schließen können. Der Traktionsspeicher 1 ist somit vom Hochspannungs-Bordnetz getrennt.

In dem Systemgehäuse 2 des Traktionsenergiespeichers 1 ist ferner eine HV-Batterie-Schützbox integriert. Es wurde vorstehend bereits erwähnt, dass die Schützbox Absicherungen 13 und Trennelemente bzw. elektrische Schalter 14 umfasst, um den spannungsführenden Teil des Traktionsenergiespeichers 1 vom Hochspannungs-Bordnetz zu trennen. Für das Zuschalten des Traktionsenergiespeichers zu einem spannungsführenden Hochvolt-Bordnetz ist eine Vorladevorrichtung ebenfalls verbaut (nicht gezeigt).

In der Schützbox ist ferner ein Steuergerät 15 verbaut, das von dem Batteriemanagementsystem 6 über eine Signalleitung 9 gesteuert werden kann. Das Steuergerät 15 enthält die Leistungselektronik zur Steuerung der Trennelemente 14.

Die Absicherungen 13 sind Sicherungen, z. B. in der vorliegenden Ausführung als Schmelzsicherungen ausgeführt, welche im Fehlerfall eines Kurzschluss im System durchschmelzen und somit den Traktionsspeicher vom HV-Bordnetz trennen.

In dem Systemgehäuse 2 des Traktionsenergiespeichers 1 ist ferner eine Hochvoltverteilungseinrichtung 5 integriert. Die Hochvoltverteilungseinrichtung 5 dient zur Strom- und Spannungsverteilung für weitere im Fahrzeugsystem angeschlossene Komponenten und ist, wie in Figur 1 gezeigt, direkt in das Gehäuse 2 des Traktionsenergiespeichers integriert. Je nach Fahrzeuganforderungen können hiermit eine variable Anzahl von Leistungs- und Nebenaggregatsschnittstellen jeweils inklusive Absicherung 13 in das Systemgehäuse des Speichers integriert werden. Hierzu sind an einer Gehäusewand des Gehäuses 2, die benachbart zu der Hochspannungsverteilungseinrichtung 5 ist, ein Hochspannungseingang 11 und eine Vielzahl von Hochspannungsausgängen 12 angeordnet. Die Anzahl von Hochspannungsausgängen 12 ist abhängig von der Anzahl der benötigten Leistungs- und Nebenaggregatsschnittstellen. In einer geöffneten Stellung des oberen Trennschalters 14 der Schützbox ist der Energiespeicher 3 von der Hochspannungsverteilereinrichtung 5 getrennt.

Für Hybrid- und Elektrofahrzeuge ist es vorteilhaft, das Fahrzeug durch die Infrastruktur zur Reichweitenverlängerung laden zu können. Dafür steht im Ausführungsbeispiel der Figur 1 eine Gleichstromladeschnittstelle zur Verfügung. Die Schnittstelle beziehungsweise das Kontaktierungssystem für das Gleichstromladen erfolgt hierfür über eine Ladebuchse 10, die am Gehäuse 2 des Traktionsenergiespeichers 1 vorgesehen ist. Ferner ist die Batterie-Schützbox mit einer Absicherung 13 und einem in Serie zur Absicherung 13 angeordneten Schalter 14 erweitert. Hierbei ist die Gleichstromladebuchse 10 über eine Hochspannungsleitung 8 der Hochspannungsverteilungseinrichtung 5 mit der Absicherung 13 und dem Trennschalter 14 in der Batterie Schützbox 4 verbunden, so dass wiederum die vorhandene Hochspannungsverteilungseinrichtung genutzt werden kann.

Hierbei ist zu erwähnen, dass die beiden dargestellten Trennelemente 14 jeweils 2 Trennelemente/Schütze umfassen, da ein Schütz für das Schalten/Trennen des Hochvolt-Pluspfades und ein Schütz für den Hochvolt-Minuspfad benötigt wird. In Summe sind in der Schützbox 4 somit vier Trennelemente 14 vorgesehen, wobei zur Vereinfachung der Darstellung nur zwei dargestellt sind.

Es ist jegliche Kombination der Schaltungszustände in der Schützbox 4 denkbar, das heißt, jeder der Schalter 14 kann unabhängig von dem anderen Schalter 14 offen oder geschlossen sein. Die Hochvoltverteilung (HVD) kann zum Beispiel Energie aus dem Antriebsstrang über den Eingang "HV In" 11 aufnehmen als auch Energie an zum Beispiel Nebenaggregate über die Ausgänge "HV Out" 12 liefern.

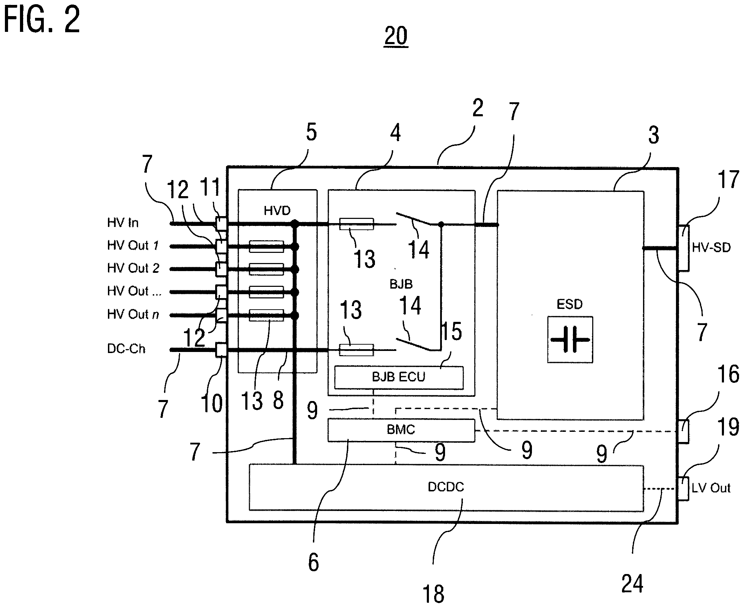

Figur 2 zeigt eine Abwandlung des nicht beanspruchten Beispiels gemäß der Figur 1, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses ebenfalls nicht beanspruchten Beispiels besteht darin, dass zusätzlich ein Bordnetz-Ladewandler 18 in das Gehäuse 2 des Traktionsenergiespeichers 20 integriert ist. Der Bordnetz-Ladewandler 18 ist ein Spannungswandler und setzt die Hochvoltspannung auf 12VDC, 24VDC oder 48VDC -Niedervoltspannung herunter. Er dient zur Unterstützung des 12VDC, 24VDC oder 48VDC -Niedervolt-Bordnetzes. Der Bordnetz-Ladewandler 18 ist in das Gehäuse 2 integriert und entnimmt die benötigte Hochvoltspannung aus der Hochspannungsverteilungseinrichtung 5. Hierzu ist der Bordnetz-Ladewandler 18 über eine Hochspannungsleitung 7 mit der Hochspannungsverteilungseinrichtung 5 verbunden, so dass der Bordnetz-Ladewandler 18 vorteilhafterweise die Hochvoltverteilung nutzen kann. Dies reduziert die notwendige Verkabelung und die damit verbundenen Kosten und ermöglicht die Vormontage des Bordnetz-Ladewandlers 18 in das Gehäuse 2 des Traktionsenergiespeichers. Über eine Niederspannungsleitung 24 ist der Bordnetz-Ladewandler 18 mit einer Niedervoltschnittstelle 19 verbunden, die in die Gehäusewand des Gehäuses 2 integriert ist.

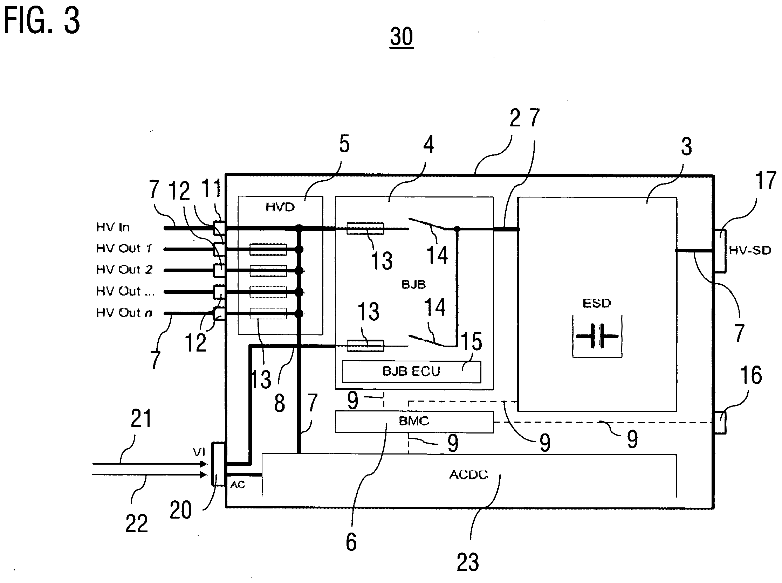

Figur 3 zeigt eine beanspruchte Abwandlung des Beispiels der Figur 1. Die Besonderheit dieses Ausführungsbeispiels liegt darin, dass anstelle des Bordnetz-Ladewandlers eine zusätzliche externe Wechselstromlademöglichkeit vorgesehen ist. Hierzu ist ein AC/DC-Wandler, auch Wechselstromladegerät 23 genannt, in das Gehäuse 2 des Traktionsenergiespeichers 30 integriert, welches zum Laden des Fahrzeugs mit Wechselstrom benötigt wird, um eine 1-phasige oder 3-phasige Wechselspannung der Infrastruktur in die geforderte Gleichspannung des Traktionsenergiespeichers zu wandeln. Dies ermöglicht die Verringerung von Hochspannungs-Schnittstellen im Fahrzeug und die Nutzung der im Speichersystem vorhandenen Kühlplatten auch für das AC/DC-Ladegerät 23. Dadurch kann ein separates Gehäuse für ein AC/DC-Ladegerät und eine separate Kühlplatte hierfür eingespart werden.

Das Wechselstromladegerät 23 speist die Spannung über die Hochspannungsverteilereinrichtung 5 direkt in den Speicher 3 für elektrische Energie ein. Hierzu ist das AC/DC-Ladegerät mit einer Hochspannungsleitung 7 mit der Hochspannungsverteilereinrichtung 5 verbunden.

Gemäß dem Ausführungsbeispiel der Figur 3 kann der Energiespeicher 3 sowohl mittels Gleichstrom als auch mittels Wechselstrom extern geladen werden. Ein externer Gleichstrom 21 und ein externer Wechselstrom 22 sind jeweils über einen Ladekopf 20 anschließbar, der am Gehäuse 2 angeordnet ist und sowohl eine Gleichstromladebuchse als auch eine Wechselstromladebuchse aufweist. Die Gleichstromladebuchse ist wie in Figur 1 beschrieben über eine Hochspannungsleitung mit der zugeordneten Absicherung 13 und dem Schalter 14 der Schützbox 4 verbunden, während die Wechselstromladebuchse über eine Hochspannungsleitung mit dem AC/DC-Ladegerät verbunden ist.

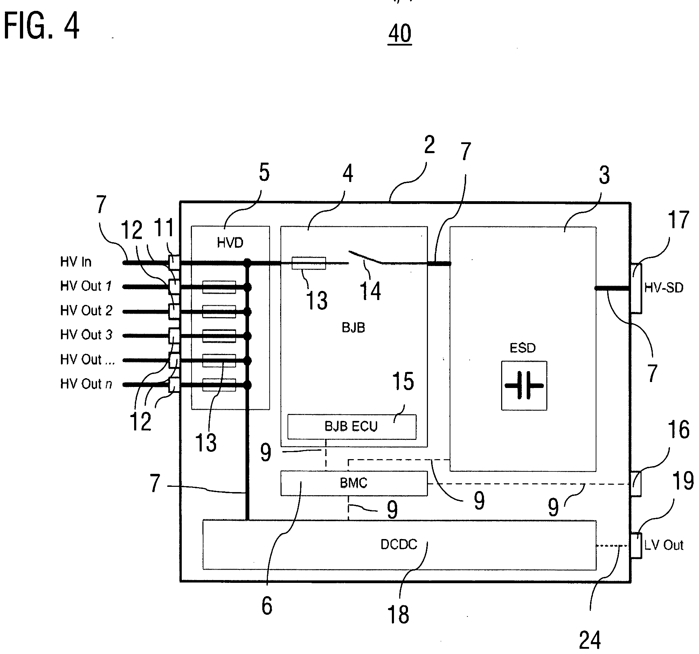

Figur 4 zeigt ein weiteres nicht beanspruchtes Beispiel eines Traktionsenergiespeichers 14, das wie das in Figur 2 gezeigte Beispiel einen Bordnetz-Ladewandler 18 umfasst, jedoch über keine externe Gleichstrom- oder Wechselstromlademöglichkeit verfügt. Beispielsweise können eine oder mehrere Traktionsenergiespeicher 14 der Figur 4 mit einem der Traktionsspeicher der Figuren 1 bis 3 kombiniert werden, um die Speicherkapazität eines Gesamtspeichers anzupassen, wobei die Komponenten für das externe Laden jeweils nur einmal bereitgestellt werden.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Traktionsenergiespeicher
- 2: Gehäuse
- 3: Batteriezellenpack
- 4: Schützbox
- 5: Hochvoltverteiler
- 6: Batteriemanagement
- 7,8: Hochspannungsleiter
- 9: Signalleitung
- 10: Hochspannungsgleichstromladebuchse
- 11: Hochspannungseingang
- 12: Hochspannungsausgang 1 ..n
- 13: Absicherung
- 14: Schalter
- 15: Steuereinheit der Schützbox
- 16: Anschlussbuchse für Steuerleitungen
- 17: Hochspannungstrennschalter (HV service disconnect)
- 18: DC/DC-Wandler
- 19: Niederspannungsausgang
- 20: Ladebuchse
- 21: Gleichstromladeleitung
- 22: Wechselstromladeleitung
- 23: AC/DC-Wandler
- 24: Niederspannungsleiter, z. B. 24 VDC

## Patentansprüche

1. Elektrische Energiespeichervorrichtung, insbesondere für Hybrid-, Plug-In-, Brennstoffzellen- und Elektrofahrzeuge, mit einem Gehäuse (2), das enthält:
- einen Speicher (3) für elektrische Energie;
- eine Batterieschützbox (4); und
- eine Hochspannungsverteilungseinrichtung (5), die zur Strom- und Spannungsverteilung ausgebildet ist,
**dadurch kennzeichnet**,
a) dass die Hochspannungsverteilungseinrichtung (5) eine Mehrzahl von Leistungs- und Nebenaggregatsschnittstellen in Form entsprechender Hochspannungsleitungen und die jeweiligen Absicherungen (13) umfasst;
b1) dass die elektrische Energiespeichervorrichtung eine Gleichstrom-Ladeschnittstelle umfasst, um den Speicher für elektrische Energie (3) aufzuladen, wobei die Gleichstrom-Ladeschnittstelle eine am Gehäuse (2) angeordnete Gleichstromladebuchse (10) umfasst, die mit einer Absicherung (13) und mindestens einer Trennvorrichtung (14), die in der Schützbox (4) angeordnet sind, verbunden ist; und
b2) dass die elektrische Energiespeichervorrichtung eine AC/DC-Ladeeinrichtung umfasst, die eine am Gehäuse (2) angeordnete Wechselstromladebuchse umfasst sowie einen im Gehäuse angeordneten AC/DC-Wandler (23), der eingangsseitig mit der Ladebuchse und ausgangsseitig mit der Hochspannungsverteilungseinrichtung (5) verbunden ist.

2. Elektrische Energiespeichervorrichtung nach Anspruch 1, **dadurch gekennzeichnet, dass** die Hochspannungsverteilungseinrichtung (5) eine Hochspannungsleitung (8) umfasst, die die Gleichstromladebuchse (10) mit der Absicherung (13) der Gleichstromladeschnittstelle verbindet.

3. Elektrische Energiespeichervorrichtung nach Anspruch 1 oder 2, **dadurch gekennzeichnet, dass** am Gehäuse (2) ein Ladekopf (20) angeordnet ist, in dem die Gleichstromladebuchse und die Wechselstromladebuchse integriert sind.

4. Elektrische Energiespeichervorrichtung nach einem der vorhergehenden Ansprüche, **gekennzeichnet durch** einen Bordnetzladewandler (18), der ausgebildet ist, die Hochvoltspannung auf eine Niedervoltspannung des Niedervoltbordnetzes herunterzuwandeln, der eingangsseitig mit der Hochspannungsverteilungseinrichtung (5) verbunden ist und ausgangsseitig mit einer Ausgangsbuchse (19), die am Gehäuse angeordnet ist.

5. Elektrische Energiespeichervorrichtung nach einem der vorhergehenden Ansprüche, **dadurch gekennzeichnet,**
a) **dass** die Batterieschützbox (4) den Speicher für elektrische Energie (3) mit der Hochspannungsverteilereinrichtung (5) verschaltet; und/oder
b) **dass** an einer Gehäusewand des Gehäuses (2), die benachbart zur der Hochspannungsverteilungseinrichtung (5) ist, ein Hochspannungseingang (11) und eine Mehrzahl von Hochspannungsausgängen (12) angeordnet sind; und/oder
c) **dass** der Speicher für elektrische Energie (3) als Batteriezellenpack ausgeführt ist.

6. Anordnung aus mindestens zwei elektrischen Energiespeichervorrichtungen nach einem der vorhergehenden Ansprüche, die parallel oder in Serie geschaltet sind, wobei nur eine der mindestens zwei elektrischen Energiespeichervorrichtungen eine Gleichstrom-Ladeschnittstelle und/oder eine AC/DC-Ladeeinrichtung aufweist.

7. Kraftfahrzeug, insbesondere Nutzfahrzeug, mit einer elektrischen Energiespeichervorrichtung nach einem der vorhergehenden Ansprüche 1 bis 6.

## Claims

1. An electrical energy storage apparatus, in particular for hybrid, plug-in, fuel cell and electric vehicles, comprising a housing (2), which contains:
- a store (3) for electrical energy;
- a battery contactor box (4); and
- a high-voltage distribution device (5), which is designed for current and voltage distribution,
**characterized in that**
a) the high-voltage distribution device (5) comprises a plurality of power and auxiliary assembly interfaces in the form of corresponding high-voltage lines and the respective fuses (13);
b1) the electrical energy storage apparatus comprises a DC charging interface in order to charge the store for electrical energy (3), wherein the DC charging interface comprises a DC charging socket (10) arranged on the housing (2), said DC charging socket being connected to a fuse (13) and at least one disconnection apparatus (14), which are arranged in the contactor box (4); and
b2) the electrical energy storage apparatus comprises an AC/DC charging device, which comprises an AC charging socket arranged on the housing (2) and an AC/DC converter (23) arranged in the housing, the input side of said AC/DC converter being connected to the charging socket and the output side of said AC/DC converter being connected to the high-voltage distribution device (5).

2. The electrical energy storage apparatus according to Claim 1, **characterized in that** the high-voltage distribution device (5) comprises a high-voltage line (8), which connects the DC charging socket (10) to the fuse (13) of the DC charging interface.

3. The electrical energy storage apparatus according to Claim 1 or 2, **characterized in that** a charging head (20) is arranged on the housing (2), in which charging head the DC charging socket and the AC charging socket are integrated.

4. The electrical energy storage apparatus according to one of the preceding claims, **characterized by** an on-board power supply system charging converter (18), which is designed to step down the high voltage to a low voltage of the low-voltage on-board power supply system, the input side of which is connected to the high-voltage distribution device (5) and the output side of which is connected to an output socket (19), which is arranged on the housing.

5. The electrical energy storage apparatus according to one of the preceding claims, **characterized in that**
a) the battery contactor box (4) connects the store for electrical energy (3) to the high-voltage distribution device (5); and/or
b) a high-voltage input (11) and a plurality of high-voltage outputs (12) are arranged on a housing wall of the housing (2), said housing wall being adjacent to the high-voltage distribution device (5); and/or
c) the store for electrical energy (3) is embodied as a battery cell pack.

6. An arrangement composed of at least two electrical energy storage apparatuses according to one of the preceding claims, said energy storage apparatuses being connected in parallel or in series, wherein only one of the at least two electrical energy storage apparatuses has a DC charging interface and/or an AC/DC charging device.

7. A motor vehicle, in particular a commercial vehicle, comprising an electrical energy storage apparatus according to one of the preceding Claims 1 to 6.

## Revendications

1. Dispositif accumulateur d'énergie électrique, en particulier pour véhicules hybrides, rechargeables, à pile à combustible et pour véhicules électriques, comprenant un boîtier (2) qui contient :
un accumulateur (3) d'énergie électrique ;
un boîtier de contacteur de batterie (4) ;
et un moyen de distribution à haute tension (5) conçu pour la distribution de courant et de tension,
caractérisé
a) en ce que le dispositif de distribution à haute tension (5) comprend une pluralité d'interfaces pour appareils de puissance et pour appareils auxiliaires sous la forme de lignes à haute tension correspondantes et les fusibles respectifs (13) ;
b1) en ce que le dispositif accumulateur d'énergie électrique comprend une interface de charge à courant continu pour charger l'accumulateur d'énergie électrique (3), dans lequel l'interface de charge à courant continu comprend une prise de charge à courant continu (10) qui est disposée sur le boîtier (2) et est reliée à un fusible (13), et au moins un dispositif de disjonction (14) qui est disposé dans le boîtier de contacteur (4) ; et
b2) en ce que le dispositif accumulateur d'énergie électrique comprend un dispositif de charge à courant alternatif/continu qui comprend une prise de charge à courant alternatif disposée sur le boîtier (2), et un convertisseur alternatif/continu (23) disposé dans le boîtier, qui est relié côté entrée à la prise de charge et côté sortie au moyen de distribution à haute tension (5) .

2. Dispositif accumulateur d'énergie électrique selon la revendication 1, **caractérisé en ce que** le moyen de distribution à haute tension (5) comprend une ligne à haute tension (8) reliant la prise de charge à courant continu (10) au fusible (13) de l'interface de charge à courant continu.

3. Dispositif accumulateur d'énergie électrique selon la revendication 1 ou 2, **caractérisé en ce qu'**une tête de charge (20), dans laquelle sont intégrées la prise de charge à courant continu et la prise de charge à courant alternatif, est disposée sur le boîtier (2).

4. Dispositif accumulateur d'énergie électrique selon l'une des revendications précédentes, **caractérisé par** un convertisseur de charge de réseau embarqué (18) conçu pour convertir la haute tension en une basse tension du réseau embarqué à basse tension, qui est relié côté entrée au dispositif de distribution à haute tension (5) et côté sortie à une douille de sortie (19) qui est disposée sur le boîtier.

5. Dispositif accumulateur d'énergie électrique selon l'une des revendications précédentes, **caractérisé**
a) **en ce que** le boîtier de contacteur de batterie (4) relie l'accumulateur d'énergie électrique (3) au dispositif de distribution à haute tension (5) ; et/ou
b) **en ce qu'**il est prévu une entrée à haute tension (11) sur une paroi de boîtier du boîtier (2) qui est adjacente au dispositif de distribution à haute tension (5), et une pluralité de sorties à haute tension (12) ; et/ou
c) **en ce que** l'accumulateur d'énergie électrique (3) est réalisé sous la forme d'un bloc d'éléments de batterie.

6. Ensemble constitué d'au moins deux dispositifs accumulateurs d'énergie électrique selon l'une des revendications précédentes, qui sont montés en parallèle ou en série, dans lequel un seul desdits au moins deux dispositifs accumulateurs d'énergie électrique possède une interface de charge à courant continu et/ou un dispositif de charge alternatif/continu.

7. Véhicule automobile, en particulier véhicule utilitaire, équipé d'un dispositif accumulateur d'énergie électrique selon l'une des revendications 1 à 6 précédentes.
